# EUROPEAN PATENT APPLICATION

(11) **EP 1 201 201 A2**
(43) Date of publication of application: **02.05.2002**
(21) Application number: 01308885.1
(22) Date of filing: 18.10.2001
(51) Int. Cl.: A61C 17/02, A61C 17/028

(54) **Mouth cavity irrigation unit**

(30) Priority: 21.10.2000 GB 0025845
(71) Applicant: Sennett, Roy, London W13 8JR (GB); Sinclair, Bernard, London W5 5NW (GB)
(72) Inventor: Sennett, Roy, London W13 8JR (GB); Sinclair, Bernard, London W5 5NW (GB)
(74) Representative: Strachan, Victoria Jane

(57) **Abstract**

A mouth cavity irrigation device comprising a main body (10) and an elongate, generally tubular reservoir (12) removably connected thereto, to provide a handle member. The main body (10) has an outlet (16) to which is removably and rotatably connected an elongate, generally frusto-conical nozzle (18). A manually-operated pump (26) is housed within the main body (10) and a dip tube (28) is connected at one end to a stepped cylinder (29) forming part of the pump (26), the other end of the dip tube (28) extending into the reservoir (12). A manually operable button (41) which activates the arrangement is provided on the outer wall of the main body (10).

## Description

This invention relates to a mouth cavity irrigation unit and, in particular, to a hand-held mouth cavity irrigation unit. Such a unit is for pumping or spraying fluid into a user's mouth cavity to 'irrigate' teeth and gums, associated appliances, in or on them, e.g. implants, the gaps between them etc., in order to flush out debris, or otherwise clean or refresh the mouth cavity.

US-A-5197458 describes a portable, hand-held, battery-operated mouth cavity sanitary device for cleaning or refreshing a user's mouth cavity by jetting liquid from a reservoir via a nozzle into the mouth cavity, when the user closes a switch.

GB-A-2018605 describes a portable, battery-operated dental cleaning device having a pump which receives a cleaning slurry from a reservoir and discharges it under vibration pressure through a nozzle into a user's mouth cavity.

We have now devised an improved arrangement, and in accordance with the present invention there is provided a mouth cavity irrigating device comprising a reservoir for holding a quantity of liquid therein, a manually operable pump having an inlet and an outlet, the pump inlet being arranged for fluid communication with the reservoir interior, the pump outlet being in fluid communication with discharge means for discharging liquid into a user's mouth cavity, the pump being arranged to cause liquid to flow from the reservoir to said discharge means, when in use.

The discharge means beneficially comprises an elongate nozzle, which may be generally frusto-conical in shape, having a generally central duct running along its length. The nozzle may be generally straight, but is beneficially curved or bent at or adjacent its outlet.

The device preferably comprises a main body member housing the pump and pump actuating means. However, the pump could be located in the reservoir in fluid communication means between the reservoir and the discharge means, or in any other suitable location in the device. The reservoir beneficially comprises an elongate vessel, preferably generally cylindrical in shape, which may provide a handle member for the device when in use. The reservoir is preferably removably connected to the main body member of the device, and the device preferably comprises an elongate tube or pipe, connected to the pump inlet, which extends into the reservoir, when in use. However, the reservoir may be surface mounted separately from the main body member (with fluid communication means provided therebetween), with a separate handle being provided integrally with or connected to, removably or otherwise, the main body member.

The discharge means, whether in the form of a nozzle or otherwise, is preferably removably and/or rotatably connected possibly by means of a push-fit or the like, to the main body member (preferably in substantially sealed arrangement). The reservoir beneficially includes space for storing one or more removable discharge means (preferably when the device is not in use and the reservoir is empty). This gives the advantages of i) reducing the overall size of the device, when not in use, for ease of storage and/or transport; and ii) helping to maintain the discharge means in a clean condition.

The pump is beneficially actuated by a push-button or the like, beneficially located on an outer wall of the main body member. The push-button may be located so that it generally faces the user's body, when in use, and can most easily be activated by the user's thumb. Alternatively, the push-button may be located so that it generally faces away from the user's body, when in use, and can most easily be activated by one or more of the user's fingers, most conveniently the index finger alone or together with the second finger in a trigger-like manner.

The device may be arranged to receive any one of a series of interchangeable discharge means such as nozzles or the like. In a preferred embodiment, the device includes a removable nozzle for providing a jet of liquid to the mouth cavity. However, the user can preferably select from a number of alternative nozzles or other discharge means to provide a sprayed or diffused flow of fluid into the mouth cavity, if required. Further, various designs of nozzle or other discharge means are envisaged which can provide a flow of fluid into the mouth cavity at various different angles relative to the main body of the unit, as required.

In a preferred embodiment, the or at least one of the interchangeable discharge means is rotatable relative to the main body member, in order to provide a flow of fluid into the mouth cavity at a range of angles, to be determined by the user according to individual requirements, for example, to irrigate either the right or left side of the mouth cavity. The bent or curved nature of the nozzle according to one preferred embodiment of the invention further facilitates this.

The discharge means or nozzle may include a protrusion on an outer surface thereof, preferably close to the fluid outlet, to provide a "drip" or the like for preventing surplus liquid from running downwards from the outlet along the outside of the device and possibly onto the user's arm or hand. In addition, or alternatively, there may be a protrusion at the tip of the nozzle to provide "spacer" means for preventing the outlet of the nozzle from being obstructed by, for example, the gum. This is particularly relevant if the nozzle outlet is on the side thereof as opposed to at the tip of the nozzle.

Thus, the present invention provides a light and compact mouth cavity irrigating device which is simple and efficient to use, and requires no battery or other external power source to operate.

Embodiments of the invention will now be described by way of examples only and with reference to the accompanying drawings, in which:
Figure 1 is a cross-sectional side view of a mouth cavity irrigation unit according to a first exemplary embodiment of the present invention;
Figure 1A is a cross-sectional side view of the pump used in the device of Figure 1;
Figure 2 is a cross-sectional side view of a mouth cavity irrigation unit according to a second exemplary embodiment of the present invention;
Figure 3 is a cross-sectional side view of a mouth cavity irrigation unit according to a third exemplary embodiment of the present invention; and
Figure 3A is a cross-sectional side view of the pump used in the device of Figure 3.

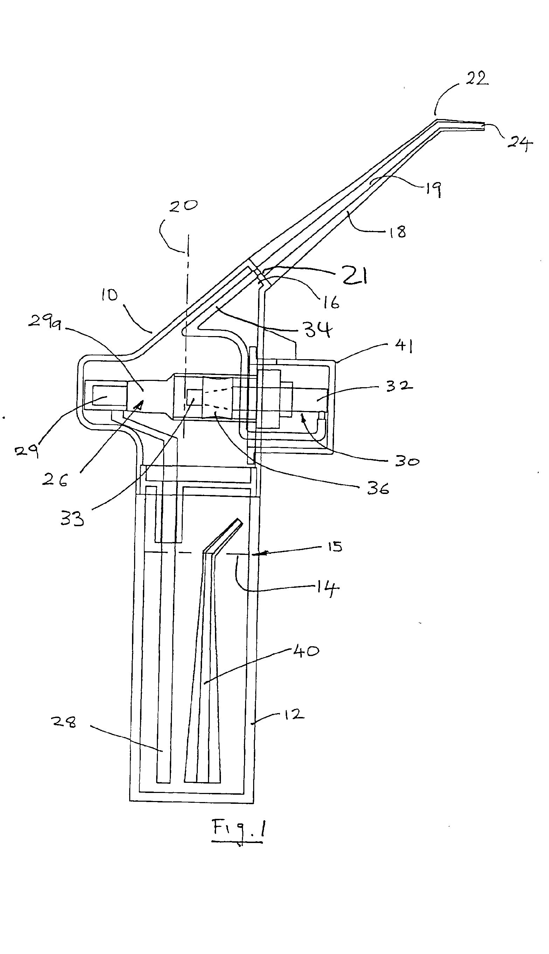

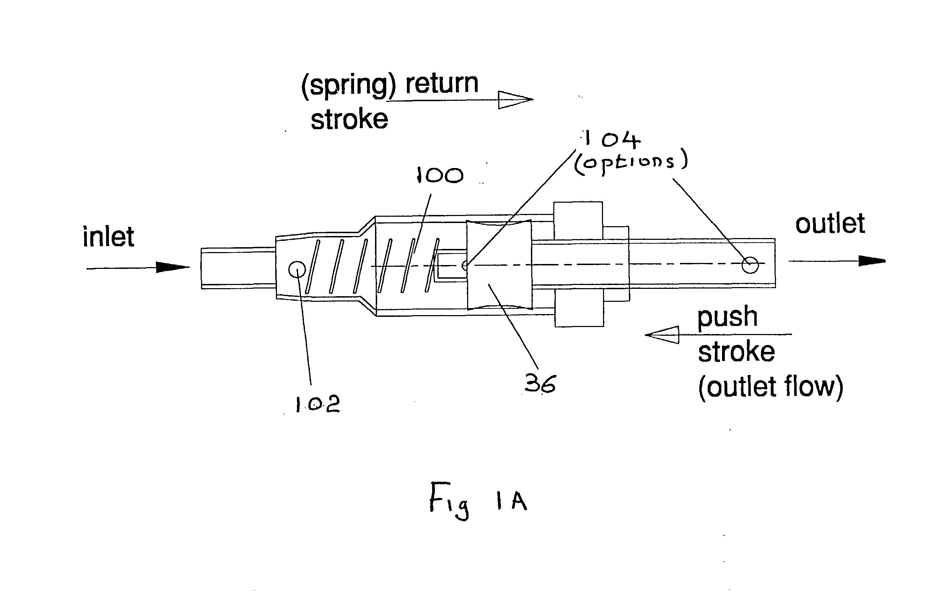

Referring to Figure 1 of he drawings, a mouth cavity irrigation device according to a first embodiment of the present invention comprises a main body 10 and an elongate, generally tubular reservoir 12 removably connected thereto, by, for example, a bayonet fitting, to provide a handle member. The reservoir holds a quantity of fluid 14, such as water, and can be removed from the main body 10 so as to be cleaned or emptied of or filled with liquid.

The main body 10 has an outlet 16 to which is removably and rotatably connected, by means of, for example, a push-fit arrangement, an elongate, generally frusto-conical nozzle 18 having a generally central channel 19 which runs from an inlet 21 to a relatively narrower outlet 24.

In this exemplary embodiment of the invention, the outlet 16 of the main body 10 is disposed at an angle to the vertical axis 20 of the main body 10 and, in this case, the reservoir 12 so that the nozzle 18, when connected to the main body 10, is also disposed at an angle to the vertical axis 20. The angle in this case is around 45°, but may be any convenient angle. The nozzle 18 is curved or bent (at 22) close to its outlet 24. It should be noted that the main body 10 and the reservoir 12 may also be at an angle to each other.

A manually-operated pump 26 is housed within the main body 10 and a dip tube 28 is connected at one end to a stepped cylinder 29 forming part of the pump 26, the other end of the dip tube 28 extending into the reservoir 12. Space is also provided in the reservoir 12 to store one or more spare or additional nozzles 40, when the device is not in use and (preferably) when the reservoir 12 is empty of liquid but connected to the main body 10.

The pump 26 comprises a stepped cylinder 29, closed at one end and having an inlet (connected to the dip tube 28). The diameter of the cylinder 29 is narrower at the closed end, as shown. The wider, open end of the cylinder 29 is provided with a piston 36, the outer circumference of which is in substantially fluid-tight, slidable engagement with the inner surface of the cylinder 29.

Operation of the pump 26 is effected by an arrangement 30 comprising a tube 32 which is in fluid communication with the channel 19 in the nozzle 18 via a resiliently flexible tube 34 connected at or adjacent one end of the tube 32. The tube 32 extends through an opening in the piston 36 into the cylinder 29, the end 33 of the tube 32 which extends into the cylinder 29 being smaller than the rest to locate with a spring (see Figure 1A). A manually operable button 41 which activates the arrangement 30 is provided on the outer wall of the main body 10.

In use, the reservoir 12 is first filled with, for example, water 14 up to a line or marking 15 indicating the maximum fluid level. For example, the reservoir 12 may be required to be filled up to a maximum of 37.5mL. The reservoir 12 is then connected to the main body 10, and the nozzle 18 is connected to the outlet 16 of the main body 10, and rotated relative thereto, as required, to obtain the desired angle of the nozzle 18 relative to the device. The device can be held in the right or left hand as required.

In order to prime the pump 26 for use, the dip tube 28 and stepped cylinder 29 must first be filled with water. When the button 41 is pressed, the arrangement, consisting of the pipe 32 and the piston 36, extends further into the cylinder 29, until the piston 36 reaches the "step" at which the cylinder 29 narrows, and the smaller diameter 33 of the tube 32 extends into the section of the cylinder denoted 29a. Within the section of the cylinder denoted 29a there is provided a spring 100 (Figure 1A) which is compressed as the smaller diameter end 33 of the tube 32 extends towards and into the cylinder section 29a. There is an inlet valve 102 (Figure 1A) between the dip tube 28 and the cylinder 29, which is initially closed. Thus, by pressing the button 41, the pressure in the cylinder is increased. When the button 41 is released, the spring (not shown) in the cylinder section 29a expands, pushing the tube 32 and the piston 36 back to their initial positions and thereby decreasing the pressure in the cylinder 29. This action causes the inlet valve to open and water to flow up the dip tube 28 and into the cylinder 29, until the pressure differential between the reservoir 12 and the cylinder 29 is equalised, at which point the inlet valve closes.

Once the dip tube 28 and cylinder 29 are filled with water, the device is ready for use.

In use, the user presses the button 41, causing the narrow diameter end 33 of the tube 32 to extend further into the stepped cylinder 29, so as to reduce the size of the cylinder 29, and subsequently into the cylinder section 29a, thereby forcing the water held therein into the tube 32. An outlet valve 104 (Figure 1A) may be provided in the tube 32, between the tube 32 and the flexible tube 34, or even outside the pump in, for example, the flexible tube 34 itself. The outlet valve 104 may be a ball valve comprising a ball which closes against a seating when there is negative pressure at 29. In an alternative embodiment, the outlet valve may be a sleeve valve whereby an aperture is provided close to the small diameter end of the tube 32, the aperture being closed by the piston when the device is not in use. When the button 41 is pressed, there is relative movement between the tube 32 and the piston whereby the tube 32 slides through the piston, exposing the aperture and allowing fluid to flow therethrough. Water flows up the tube 32, the outlet valve opens and the water flows through the tube 32, through the flexible tube 34, into the channel 19 and out through the nozzle 24 in the form of a jet into the mouth cavity. Once all of the pressurised water from the cylinder 29 has been released, the button 41 is released, the outlet valve closes and the tube 32 and piston 36 return to their initial positions, reducing the pressure in the cylinder 29 and drawing more water from the reservoir 12 up through the dip tube 28 and into the cylinder 29, as described above.

Thus, once the pump has been primed, each time the button 40 is pressed all the way in to give a "full" stroke, a predetermined fixed volume of water is ejected from the nozzle outlet 24 into the mouth cavity. If, for example, the reservoir 12 holds 37.5mL of water, the device could be arranged to dispense 50 doses of 0.75mL each, after which the reservoir would need to be refilled. It is likely that a complete operation would require several activations (i.e. pushes) of the pump 26. It should be noted that the user also has the option to operate the unit using partial strokes or pushes of the button so that less than the predetermined fixed volume of water is dispensed. The user may also have the option to vary the rate or frequency at which the button is pushed. These options provide the user with substantially more control over the flow rate than prior art devices.

In another exemplary embodiment of the invention, the water to be discharged from the device could be initially pressurised by, for example, a spring activated piston, and water output could be controlled by means of a valve or the like, controllable by the user. Water discharge could then be continuous or intermittent, as desired.

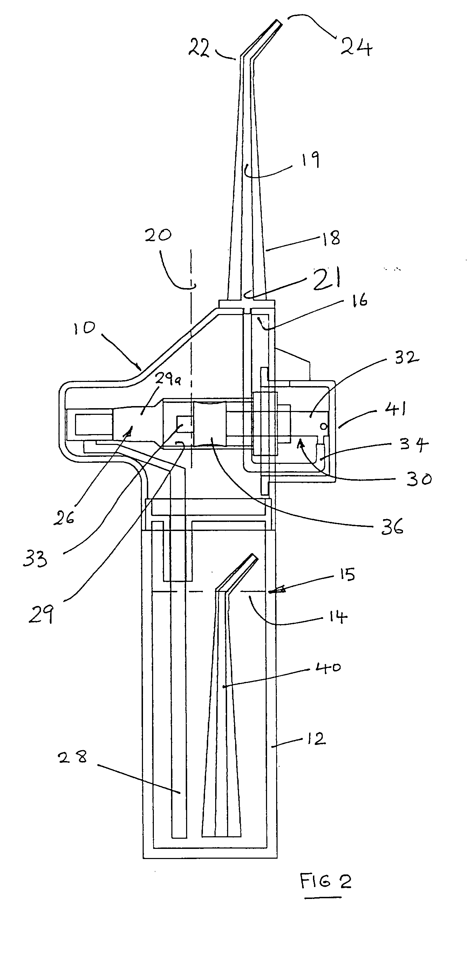

Referring to Figure 2 of the drawings, a mouth cavity irrigation device according to a second embodiment of the invention, is substantially the same in all respects to the exemplary embodiment described with reference to Figure 1, except that the outlet 16 of the main body 10 is not disposed at an angle to the vertical axis 20 of the main body, and instead the nozzle 18 extends upwardly from the main body 10, substantially in line therewith.

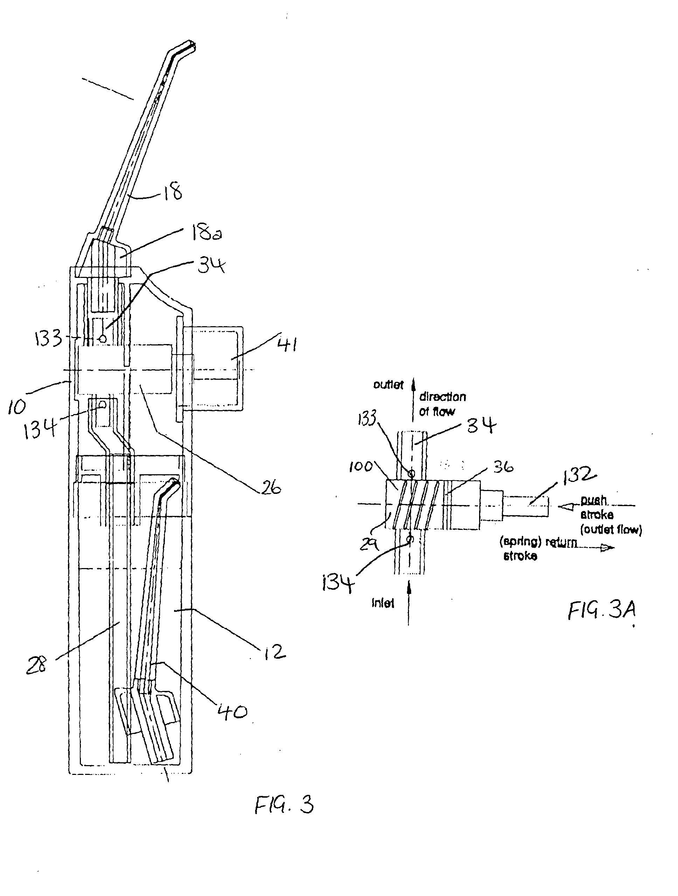

Referring to Figure 3 of the drawings, a mouth cavity irrigation device according to a third exemplary embodiment of the invention is similar in many respects to the first and second exemplary embodiments described above. In this case, however the main body 10 and the reservoir 12 are both generally cylindrical (although other shapes are envisaged) and are connected together to provide a relatively narrow, elongate structure, with the nozzle 18 removably connected to a nozzle holder which is removably connected at the top of the main body as shown. The nozzle holder 18a is rotatable (about a substantially vertical axis) relative to the main body 10 and the nozzle 18, which is disposed at an approximately 20° angle thereto, is rotatable relative to the nozzle holder 18a. It will be appreciated that any convenient nozzle angle (including 0°) is intended to be encompassed by the invention.

The pump 26 is once again a generally elongate structure comprising a cylinder 29, an inlet and an outlet, but the pump 26 is somewhat different so as to substantially reduce the diameter of the device required to accommodate it.

Referring in particular to Figure 3A, the structure and operation of the pump 26 in the third exemplary embodiment is substantially the same as that described with reference to the first exemplary embodiment, except that the tube 32 (Figure 1) is replaced by a solid member 132 which pushes the piston 36 into the cylinder 29 when the button is pressed. The outlet and outlet valve 133 (connected to the tube 34 leading to the nozzle 18) is provided for the cylinder 29, and (in the arrangement shown) diametrically opposite the inlet and inlet valve 134.

Embodiments of the invention have been described above by way of examples only and it will be apparent to persons skilled in the art that modifications and variations can be made to the described embodiments without departing from the scope of the invention.

## Claims

1. A mouth cavity irrigating device comprising a reservoir for holding a quantity of liquid therein, a manually operable pump having an inlet and an outlet, the pump inlet being arranged for fluid communication with the reservoir interior, the pump outlet being in fluid communication with discharge means for discharging liquid into a user's mouth cavity, the pump being arranged to cause liquid to flow from the reservoir to said discharge means, when in use.

2. A mouth cavity irrigating device according to claim 1,
wherein said discharge means comprises an elongate nozzle, having a generally central duct running along its length; and wherein said nozzle may be curved or bent at or adjacent its outlet.

3. A mouth cavity irrigating device according to claim 1 or claim 2, comprising a main body member housing the pump and pump actuating means; or
wherein the pump is located in the reservoir in fluid communication means between the reservoir and the discharge means.

4. A mouth cavity irrigating device according to any one of the preceding claims, wherein the reservoir comprises an elongate vessel, preferably generally cylindrical in shape, which may provide a handle member for the device when in use.

5. A mouth cavity irrigation device according to any one of the preceding claims, wherein the reservoir is removably connected to the main body member of the device, and the device preferably comprises an elongate tube or pipe, connected to the pump inlet, which extends into the reservoir, when in use; or
wherein the reservoir is surface mounted separately from the main body member (with fluid communication means provided therebetween), with a separate handle being provided integrally with or connected to, removably or otherwise, the main body member.

6. A mouth cavity irrigating device according to any one of the preceding claims, wherein the discharge means, whether in the form of a nozzle or otherwise, is removably and/or rotatably connected to the main body member (preferably in substantially sealed arrangement).

7. A mouth cavity irrigating device according to any one of the preceding claims, wherein the reservoir includes space for storing one or more removable discharge means (preferably when the device is not in use and the reservoir is empty).

8. A mouth cavity irrigating device according to any one of the preceding claims, wherein the pump is actuated by push button or the like, beneficially located on an outer wall of the main body member.

9. A mouth cavity irrigating device according to claim 8,
wherein the push button is located so that it generally faces the user's body, when in use; or wherein the push button is located so that it generally faces away from the user's body, when in use.

10. A mouth cavity irrigating device according to any one of the preceding claims arranged to receive any one of a series of interchangeable discharge means such as nozzles or the like; and/or
including a removable nozzle for providing a jet of liquid to the mouth cavity; and/or arranged to receive one of a number of interchangeable discharge means, at least one of the interchangeable discharge means being rotatable relative to the main body member, in order to provide a flow of liquid into the mouth cavity at a range of angles, to be determined by the user; and/or
wherein the discharge means includes a protrusion on an outer surface thereof, preferably close to the fluid outlet, to provide a "drip" or the like for preventing surplus liquid from running downwards from the outlet along the outside of the device; and/or
including a protrusion at the tip of the discharge means to provide a "spacer" means for preventing the outlet of the nozzle from being obstructed by, for example, the user's gum.
